(19) Europäisches Patentamt
European Patent Office
Office européen des brevets

(11) Publication number: **0 058 404**
**B1**

(12) # EUROPEAN PATENT SPECIFICATION

(45) Date of publication of patent specification: **22.01.86**

(51) Int. Cl.$^4$: **C 08 L 67/02**

(21) Application number: **82101027.9**

(22) Date of filing: **11.02.82**

(54) **Plasticized polyarylate compositions.**

(30) Priority: **12.02.81 US 233697**

(43) Date of publication of application:
**25.08.82 Bulletin 82/34**

(45) Publication of the grant of the patent:
**22.01.86 Bulletin 86/04**

(84) Designated Contracting States:
**AT BE CH DE FR GB IT LI LU NL SE**

(56) References cited:
**EP-A-0 024 245**
**EP-A-0 037 547**
**DE-A-2 046 963**

**JOURNAL OF APPLIED POLYMER SCIENCE, vol. 23, no. 3, 1st February 1979, page 645-659, John Wiley & Sons Inc., New York (USA); L.M. ROBESON et al.: "miscible blends of poly (butylene terphthalate) and the polyhydroxyether of bisphenol A"**

(73) Proprietor: **UNION CARBIDE CORPORATION**
**39 Old Ridgebury Road**
**Danbury Connecticut 06817 (US)**

(72) Inventor: **Dickinson, Barry Lee**
**Cedar Road, R.D. 1**
**Whitehouse Station New Jersey 08889 (US)**

(74) Representative: **Weinhold, Peter, Dr. et al**
**Patentanwälte Dr. V. Schmied-Kowarzik Dipl.-Ing. G. Dannenberg Dr. P. Weinhold Dr. D. Gudel Dipl.-Ing. S. Schubert Dr. P. Barz**
**Siegfriedstrasse 8**
**D-8000 München 40 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**EP 0 058 404 B1**

Courier Press, Leamington Spa, England.

**Description**

This invention is directed to a plasticized polyarylate composition comprising in admixture, 95 to 75 weight percent of a polyarylate derived from a dihydric phenol and at least one aromatic dicarboxylic acid and having a reduced viscosity of from 0.4 to greater than 1.0 dl/g and from 5 to 25 weight percent of an oligomeric poly(arylether) having a reduced viscosity of from 0.10 to 0.45 dl/g, the further addition of a polyester derived from an aliphatic or cycloaliphatic diol, or mixtures thereof and at least one aromatic dicarboxylic acid being excluded.

Polyarylates are aromatic polyesters derived from a dihydric phenol, particularly 2,2 - bis(4 - hydroxyphenyl)propane also identified as bisphenol-A, and an aromatic dicarboxylic acid, particularly mixtures of terephthalic and isophthalic acids. These polyarylates are high temperature, high performance thermoplastic polymers with a good combination of thermal and mechanical properties.

However, polyarylates are generally processed at temperatures of about 360°C (680°F). At these temperatures the mechanical properties of the polyarylate may be detrimentally affected. Additives have been proposed which lower the processing temperature of the polyarylate. However, many of these polyarylates are not stable at these processing temperatures. Thus, there is a desire to lower the processing temperature of the polyarylate without affecting the mechanical properties. Also, if an additive is used to lower the processing temperature it must be compatible with and not degrade the polyarylate.

DE—A—20 46 963 discloses in a very broad and general way thermoplastic polymer mixtures consisting of thermoplastic polyesters and one or more aromatic polysulfones. The latter may also contain ether linkages. However, as stated in the description the preferred polyesters are derived from glycols as the alcohol component and in the examples mainly polyethylene terephthalate is used for this purpose. From said examples one can also conclude that the best results may be obtained when the polysulfone (polyarylether) constitutes the major part of the mixture.

The intermediate document EP—A—24 245 (Art. 54(3) EPC) discloses among others mixtures of polyarylates and polyarylethers like those of the present invention which additionally contain a polyester derived from aliphatic or cycloaliphatic diols and at least one aromatic dicarboxylic acid as third component.

It has now been discovered that by admixing from 5 to 25 weight percent of an oligomeric poly(aryl ether) having a reduced viscosity of from 0.10 to 0.45 dl/g with a polyarylate derived from a dihydric phenol and at least one aromatic dicarboxylic acid and having a reduced viscosity of from 0.4 to greater than 1.0 dl/g, the polyarylate may be processed at lower temperature, thus retaining the high mechanical properties of the polyarylate.

In the practice of this invention, the oligomeric poly(aryl ethers) which may be used are linear, thermoplastic polyarylene polyether polysulfone oligomers, wherein the arylene units are interspersed with ether and sulfone linkages. These resins may be obtained by reaction of an alkali metal double salt of a dihydric phenol and a dihalobenzenoid compound, either or both of which contain a sulfone or ketone linkage, i.e., $—SO_2—$ or —CO— between arylene groupings, to provide sulfone or ketone units in the polymer chain in addition to arylene units and ether units. The polysulfone polymer has a basic structure comprising recurring units of the formula:

$$—O—E—O—E'—$$

wherein E is the residuum of the dihydric phenol and E' is the residuum of the benzenoid compound having an inert electron withdrawing group in at least one of the positions ortho and para to the valence bonds; both of said residua are valently bonded to the ether oxygens through aromatic carbon atoms. Such polysulfones are included within the class of polyarylene polyether resins described in US—A—3,264,536, and 4,108,837, for example.

The residuum of a dihydric phenol, E is derived from dinuclear phenols having the structure:

$$\begin{array}{ccc} (A)_r & & (A_1)_{r_1} \\ | & & | \\ OH(Ar & —R— & Ar)OH \end{array}$$

wherein Ar is an aromatic group and preferably is a phenylene group, A and $A_1$ may be the same or different inert substituent groups, such as alkyl groups having from 1 to 4 carbon atoms, halogen atoms, i.e., fluorine, chlorine, bromine or iodine, or alkoxy radicals having from 1 to 4 carbon atoms, r and $r_1$ are integers having a value of from 0 to 4, inclusive, and R is representative of a bond between aromatic carbon atoms as in dihydroxydiphenyl, or is a divalent radical, including, for example, CO, O, S, S—S, $SO_2$ or a divalent organic hydrocarbon radical, such as alkylene, alkylidene, cycloalkylene, cycloalkylidene, or the halogen, alkyl, aryl substituted alkylene, alkylidene, cycloalkylene, and cycloalkylidene radicals as well as alkarylene and aromatic radicals and a ring fused to both Ar groups.

Typical preferred oligomers have recurring units having the following structure:

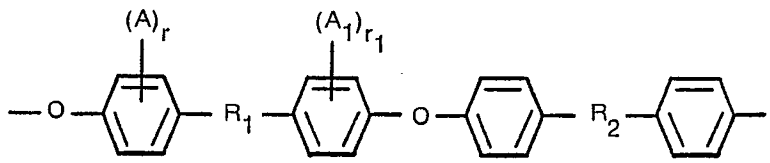

as described in US—A—4,108,837, supra. In the foregoing formula A and $A_1$ can be the same or different inert substituent groups as alkyl groups having from 1 to 4 carbon atoms, halogen atoms (e.g., fluorine, chlorine, bromine or iodine) or alkoxy radicals having from 1 to 4 carbon atoms, r and $r_1$ are integers having a value of from 0 to 4, inclusive. Typically, $R_1$ is representative of a bond between aromatic carbon atoms or a divalent connecting radical and $R_2$ represents sulfone, carbonyl, or sulfoxide. Preferably, $R_1$ represents a bond between aromatic carbon atoms. Even more preferred are the oligomeric polysulfones of the above formula wherein r and $r_1$ are zero, $R_1$ is a divalent connection radical of the formula

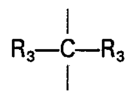

wherein $R_3$ is independently selected from lower alkyl, aryl, and the halogen substituted groups thereof, preferably methyl and $R_2$ is a sulfone group.

The poly(aryl ether) oligomers have a reduced viscosity of from 0.10 to 0.45 dl/g as measured in an appropriate solvent at an appropriate temperature depending on the particular polyether, such as in methylene chloride at 25°C.

The preferred poly(aryl ether) oligomers have repeating units of the formula:

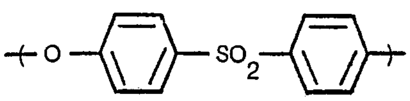

and particularly

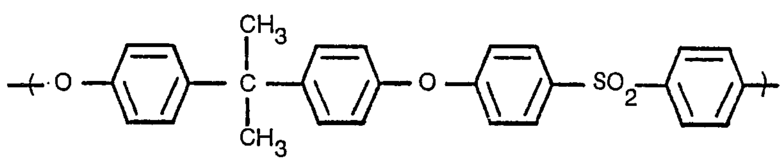

The polyarylates which are suitable for use in this invention are derived from a dihydric phenol and at least one aromatic dicarboxylic acid and have a reduced viscosity of from 0.4 to greater than 1.0, preferably from 0.6 to 0.8 dl/g as measured in chloroform (0.5 g/dl chloroform) or other suitable solvent at 25°C.

A particularly desirable dihydric phenol is of the following formula:

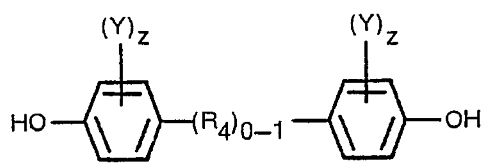

wherein Y is selected from alkyl groups of 1 to 4 carbon atoms, chlorine or bromine, each z, independently, has a value of from 0 to 4, inclusive, and $R_4$ is a divalent saturated or unsaturated aliphatic hydrocarbon radical, particularly an alkylene or alkylidene radical having from 1 to 3 carbon atoms, or a cycloalkylidene or cycloalkylene radical having up to and including 9 carbon atoms. Preferred dihydric phenols are those with each z being 0 and $R_4$ being an alkylidene radical of 3 carbon atoms, e.g. bisphenol-A. The dihydric phenols may be used individually or in combination.

The aromatic dicarboxylic acids that may be used in this invention include terephthalic acid, isophthalic acid, any of the naphthalene dicarboxylic acids and mixtures thereof, as well as alkyl substituted homologs of these carboxylic acids, wherein the alkyl group contains from 1 to 4 carbon atoms, and acids containing other inert substituents, such as halides and alkyl or aryl ethers. Preferably, mixtures of isophthalic and terephthalic acids are used. The isophthalic acid to terephthalic acid ratio in the mixture is 20:80 to 100:0, while the most preferred acid ratio is 75:25 to 50:50. Also, from 0.5 to 20 percent of aliphatic diacids containing from 2 to 10 carbon atoms, such as adipic acid and sebacic acid may be additionally used in the polymerization reaction.

The polyarylates of the present invention can be prepared by any of the well known prior art polyester forming reactions, such as the reaction of the acid chlorides of the aromatic dicarboxylic acids with the

dihydric phenols; the reaction of the diaryl esters of the aromatic dicarboxylic acids with the dihydric phenols; or the reaction of the aromatic diacids with diester derivatives of the dihydric phenol. These processes are described in, for example, US—A—3,317,464; 3,948,856; 3,780,148; 3,824,213; and 3,133,898.

Preferably, the polyarylates used in this invention are prepared by the process described in EP—A—48 493. This application describes an improved process for preparing a polyarylate having a reduced viscosity of from about 0.5 to greater than 1.0 dl/g which process comprises the following steps:

(a) reacting an acid anhydride derived from an acid containing from 2 to 8 carbon atoms with at least one dihydric phenol to form the corresponding diester; and

(b) reacting said diester with at least one aromatic dicarboxylic acid at a temperature sufficient to form the polyarylate, wherein the improvement comprises removing residual acid anhydride, after formation of the dihydric phenol diester, so that its concentration is less than about 1500 parts per million.

The poly(aryl ether) oligomer is used in plasticizing amounts, i.e. from 5 to 25, preferably from 5 to 15 weight percent, most preferably 10 weight percent.

Other additives may be included in the composition of this invention. These additives include pigments, reinforcing agents, such as glass fibers; thermal stabilizers; ultraviolet light stabilizers and impact modifiers of one or more thermoplastic polymers.

The compositions are prepared by blending the polyarylate, poly(aryl ether) oligomer and any other optional ingredients by any conventional mixing methods. For example, the polyarylate and poly(aryl ether) oligomer are mixed in powder or granular form in an extruder and extruding the mixture into strands, chopping the strands into pellets and molding the pellets into the desired article.

Examples

The following examples serve to give specific illustrations of the practice of this invention. In these examples, all parts and percentages are on a weight basis unless otherwise specified.

In the Examples the following designations are used:

PS oligomer I —

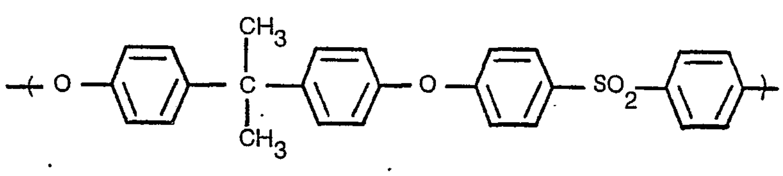

having a reduced viscosity of 0.42 dl/g as measured in methylene chloride at 25°C.

PS oligomer II —

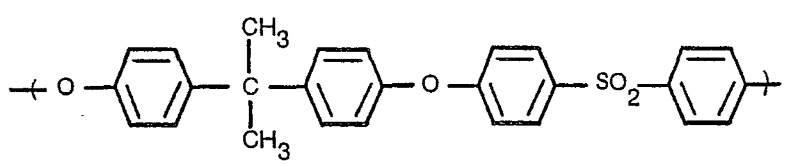

having a reduced viscosity of 0.34 dl/g as measured in methylene chloride at 25°C.

Control A

A polyarylate (prepared from bisphenol-A and a mixture of 50 mole percent of terephthalic acid chloride and 50 mole percent of isophthalic acid chloride by conventional methods) having a reduced viscosity of 0.66 dl/g as measured in p-chlorophenol at 49°C was injection molded in a 7.5 cm (3 in.) Van Dorn® molding machine at the following temperatures: rear 327°C (620°F), middle 360°C (680°F), front 363°C (685°F), nozzle 340°C (644°F) and stock 393°C (740°F), into an ASTM test bar.

The polyarylate was injection molded into ASTM test bars at a low temperature and a high temperature. The low temperature was that temperature necessary to fill the mold while the high temperature was the highest temperature at which no appearance of degradation takes place. The medium temperature was the difference between the two. At each of these temperatures the melt flow of the polymers was tested as well as the mechanical properties of the ASTM test bar. The ASTM test bar was tested for the following mechanical properties: tensile strength and modulus according to ASTM D-638; elongation at break according to ASTM D-256; tensile impact strength according to ASTM D-1822; heat distortion temperature according to ASTM D-635.

The melt flow of the polymer was measured in a Tinius Olsen thermodyne® (melt flow cell) at 375°C. The polyer was added to the preheated (375°C) chamber of the thermodyne and put under a constant pressure of 3.0 bar (44 psi). One sample of the polymer was held at this temperature and pressure for 10

minutes (Melt Flow I) and another sample held at the temperature and pressure for 30 minutes (Melt Flow II).

The results are shown in Table I.

Example 1

95 weight percent of the polyarylate described in Control A was tumble mixed with 5 weight percent of PS oligomer I. The blend was injection molded and tested by the procedure described in Control A.

The results are shown in Table I.

Example 2

95 weight percent of the polyarylate described in Control A was blended with 5 weight percent of PS oligomer II by the procedure as described in Example 1. The blend was injection molded and tested by the procedure described in Control A.

The results are shown in Table I.

Example 3

90 weight percent of the polyarylate described in Control A was blended with 10 weight percent of PS oligomer I by the procedure as described in Example 1. The blend was injection molded and tested by the procedure described in Control A.

The results are shown in Table I.

Example 4

75 weight percent of the polyarylate described in Control A was blended with 25 weight percent of PS oligomer by the procedure as described in Example 1. The blend was injection molded and tested by the procedure described in Control A.

The results are shown in Table I.

The data in the Table shows that the addition of the polysulfone oligomer to the polyarylate increases molding latitude since the low temperature is generally decreased so that heat effects on the polymer are minimized.

In the above mentioned formulae alkyl with 1 to 4 carbon atoms is preferably methyl, ethyl, propyl, i-propyl, butyl, i-butyl, sec.-butyl or tert.-butyl. Alkylene is preferably methylene, ethylene, 1,3 or 1,2-propylene. A cycloalkylene residue contains preferably 3 to 8 carbon atoms like cyclopropane, cyclobutane, cyclopentane, cyclohexane, cycloheptane or cyclooctane.

TABLE I

| | Control A | | | | 1 | | | | 2 | | | |
|---|---|---|---|---|---|---|---|---|---|---|---|---|
| | High | Low | Medium | AT | High | Low | Medium | AT | High | Low | Medium | AT |
| Molding temperature, °C (°F) | 399 (750) | 352 (665) | 377 (710) | 53 (85) | 410 (770) | 363 (685) | 379 (715) | 47 (85) | 410 (770) | 338 (640) | 371 (700) | 72 (130) |
| Injection pressure, bar (psi) | | | | | | | | | | | | |
| High | 57 (825) | 117 (1700) | 117 (1700) | | 64 (975) | 127 (1850) | 86 (1250) | | 55 (800) | 124 (1800) | 76 (1100) | |
| Low | — | 48 (700) | 78 (1125) | | 53 (775) | 124 (1800) | 74 (1075) | | 48 (700) | 48 (700) | 48 (700) | |
| Properties of the resin | | | | | | | | | | | | |
| Melt flow I | 19.2 | 16.0 | 11.7 | | 9.1 | 7.8 | 7.8 | | 17.0 | 12.7 | 15.8 | |
| Melt flow II | 29.5 | 16.6 | 12.9 | | 12.4 | 8.4 | 8.7 | | 25.9 | 19.1 | 20.7 | |
| Mechanical properties | | | | | | | | | | | | |
| Notched izod, kJ/m² (ft-lb/in²) | 9.45 (4.50) | 9.45 (4.50) | 10.42 (4.96) | | — | — | — | | 9.2 (4.4) | 9.2 (4.4) | 9.9 (4.7) | |
| Tensile strength, N/mm² (psi) | 62.8 (9120) | 63.4 (9210) | 66.2 (9610) | | 72.3 (10.500) | 62.0 (9000) | 73.0 (10.600) | | 60.1 (8720) | 61.4 (8920) | 64.1 (9310) | |
| Elongation (%) | 49.5 | 55.0 | 61.0 | | 75.0 | 43.0 | 71.0 | | 41.5 | 27.5 | 58.5 | |
| Tensile modulus, N/mm²×10⁴ ((psi)×10⁶) | 2.07 (3.0) | 2.09 (3.03) | 2.08 (3.02) | | 2.15 (3.12) | 2.20 (3.20) | 2.14 (3.10) | | 2.09 (3.04) | 2.13 (3.09) | 2.14 (3.10) | |
| Tensile impact kJ/m² (ft-lb/in²) | — | — | — | | 202 (96.2) | 199 (94.7) | 197 (93.9) | | — | — | — | |
| Heat distortion temp., °C | 172.9 | 172.5 | 169.9 | | 165.3 | 170.6 | 167.1 | | — | — | — | |

TABLE I (contd.)

| | 3 | | | | 4 | | | |
|---|---|---|---|---|---|---|---|---|
| | High | Low | Medium | AT | High | Low | Medium | AT |
| Molding temperature, °C (°F) | 413 (775) | 341 (645) | 360 (680) | 72 (130) | 416 (780) | 346 (655) | 366 (690) | 70 (125) |
| Injection pressure, bar (psi) | | | | | | | | |
| High | 62 (900) | 119 (1725) | 88 (1275) | | 55 (800) | 127 (1850) | 79 (1150) | |
| Low | 38 (550) | — | 69 (1000) | | 34 (500) | 122 (1175) | 69 (1000) | |
| Properties of the resin | | | | | | | | |
| Melt flow I | 18.1 | 16.9 | 15.2 | | 17.6 | 19.6 | 11.7 | |
| Melt flow II | 24.5 | 19.6 | 26.8 | | 22.4 | 22.4 | 14.5 | |
| Mechanical properties | | | | | | | | |
| Notched izod, $kJ/m^2$ ($ft\text{-}lb/in^2$) | 9.47 (4.51) | 10.21 (4.86) | 10.71 (5.10) | | — | — | — | |
| Tensile strength, $N/mm^2$ (psi) | 60.3 (8750) | 60.8 (8820) | 68.9 (10.000) | | 66.0 (9580) | 61.6 (8940) | 71.0 (10.300) | |
| Elongation (%) | 45 | 33.5 | 73.5 | | 72.0 | 58.0 | 75.0 | |
| Tensile modulus, $N/mm^2 \times 10^4$ ($(psi) \times 10^6$) | 2.17 (3.15) | 2.13 (3.09) | 2.09 (3.04) | | 2.28 (3.31) | 2.29 (3.32) | 2.26 (3.28) | |
| Tensile impact, $kJ/m^2$ ($ft\text{-}lb/in^2$) | 200 (95.2) | 208 (98.9) | 202 (96.1) | | 290 (138) | 254 (121) | 309 (147) | |
| Heat distortion temp., °C | 169.1 | 170.8 | 169.7 | | — | — | — | |

**Claims**

1. A plasticized polyarylate composition comprising in admixture 95 to 75 weight percent of a polyarylate derived from a dihydric phenol and at least one aromatic dicarboxylic acid and having a reduced viscosity of from 0.4 to greater than 1.0 dl/g and from 5 to 25 weight percent of an oligomeric poly(aryl ether) having a reduced viscosity of from 0.10 to 0.45 dl/g, the further addition of a polyester derived from an aliphatic or cycloaliphatic diol, or mixtures thereof and at least one aromatic dicarboxylic acid being excluded.

2. A composition as defined in claim 1 wherein the dihydric phenol is of the formula:

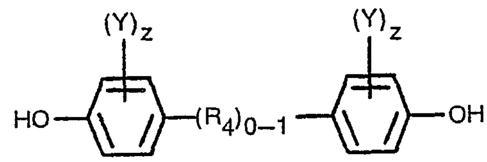

wherein Y is selected from alkyl groups of 1 to 4 carbon atoms, chlorine or bromine, each z, independently, has a value of from 0 to 4, inclusive, and $R_4$ is a divalent saturated or unsaturated aliphatic hydrocarbon radical selected from alkylene and alkylidene radicals having from 1 to 3 carbon atoms, and cycloalkylene or cycloalkylidene radicals having up to and including 9 carbon atoms.

3. A composition as defined in claim 2 wherein each z is 0 and $R_4$ is an alkylidene radical of 3 carbon atoms.

4. A composition as defined in claim 1 wherein the aromatic dicarboxylic acid is a mixture of isophthalic and terephthalic acids.

5. A composition as defined in claim 1 wherein the poly(aryl ether) comprises recurring units of the formula:

$$-O-E-O-E'$$

wherein E is the residuum of a dihydric phenol and E' is the residuum of a benzenoid compound having an inert electron withdrawing group.

6. A composition as defined in claim 5 wherein the poly(aryl ether) has recurring units having the formula:

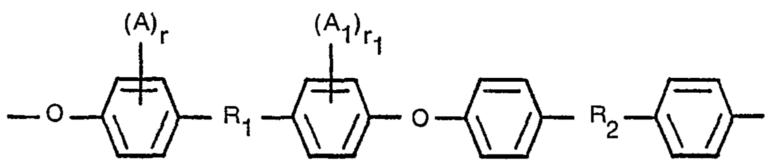

A and $A_1$ can be the same or different inert substituent groups and are selected from alkyl groups having from 1 to 4 carbon atoms, fluorine, chlorine, bromine, iodine, or alkoxy radicals having from 1 to 4 carbon atoms, $R_1$ represents a bond between aromatic carbon atoms or a divalent connecting radical, $R_2$ is sulfone, carbonyl or sulfoxide, r and $r_1$ are integers having a value of from 0 to 4, inclusive.

7. A composition as defined in claim 6 wherein r and $r_1$ are 0, $R_2$ is $SO_2$, and $R_1$ is the following

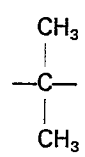

**Patentansprüche**

1. Weichgemachte Polyarylatzusammensetzung, enthaltend in Mischung 95 bis 75 Gew.-% eines Polyarylates, das von einem zweiwertigen Phenol und mindestens einer aromatischen Dicarbonsäure abgeleitet ist und eine Viskositätszahl von 0,4 bis größer als 1,0 dl/g hat, und 5 bis 25 Gew.-% eines oligomeren Poly(arylethers) mit einer Viskositätszahl von 0,10 bis 0,45 dl/g, wobei die weitere Zugabe eines Polyesters, der von einem aliphatischen oder cycloaliphatischen Diol oder Mischungen desselben und mindestens einer aromatischen Dicarbonsäure abgeleitet ist, ausgeschlossen sein soll.

2. Zusammensetzung nach Anspruch 1, worin das zweiwertige Phenol die Formel

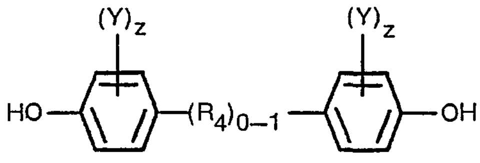

hat, worin A ausgewählt ist aus Alkylgruppen mit 1 bis 4 Kohlenstoffatomen, Chlor oder Brom, jedes z unabhängig einen Wert von 0 bis 4 einschließlich hat, und $R_4$ ein zweiwertiger gesättigter oder ungesättigter aliphatischer Kohlenwasserstoffrest, ausgewählt aus Alkylen- und Alkylidenresten mit 1 bis 3 Kohlenstoffatomen und Cycloalkylen- oder Cycloalkylidenresten mit bis zu und einschließlich 9 Kohlenstoffatomen, ist.

3. Zusammensetzung nach Anspruch 2, in welcher jedes z=0 ist und $R_4$ ein Alkylidenrest mit 3 Kohlenstoffatomen ist.

4. Zusammensetzung nach Anspruch 1, in welcher die aromatische Dicarbonsäure eine Mischung aus Isophthal- und Terephthalsäure ist.

5. Zusammensetzung nach Anspruch 1, in welcher der Poly(arylether) wiederkehrende Einheiten der Formel

$$—O—E—O—E'$$

umfaßt, worin E der Rest eines zweiwertigen Phenols ist und E' der Rest einer Benzenoidverbindung mit einer inerten, elektronabziehenden Gruppen ist.

6. Zusammensetzung nach Anspruch 5, in welcher der Poly(arylether) wiederkehrende Einheiten der Formel

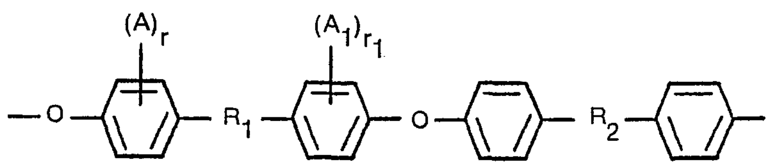

hat, worin A und $A_1$ gleiche oder verschiedene inerte Substituentengruppen sein können und ausgewählt sind aus Alkylgruppen mit 1 bis 4 Kohlenstoffatomen, Fluor, Chlor, Brom, Jod oder Alkoxyresten mit 1 bis 4 Kohlenstoffatomen, $R_1$ eine Bindung zwischen aromatischen Kohlenstoffatomen oder einen zwewiertigen verbindenden Rest darstellt, $R_2$ Sulfon, Carbonyl oder Sulfoxid ist, r und $r_1$ ganze Zahlen mit einem Wert von 9 bis 4 einschließlich sind.

7. Zusammensetzung nach Anspruch 6, in welcher r und $r_1$=0 sind, $R_2$=$SO_2$ ist und $R_1$ die folgende Bedeutung hat:

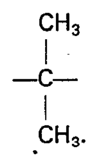

**Revendications**

1. Composition de polyarylate plastifiée comprenant en mélange 95 à 75% en poids d'un polyarylate dérivé d'un phénol dihydroxylique et d'au moins un acide dicarboxylique aromatique et ayant une viscosité réduite de 0,4 à plus de 1,0 dl/g, et de 5 à 25% en poids d'un poly(éther d'aryle) oligomérique ayant une viscosité réduite de 0,10 à 0,45 dl/g, l'addition ultérieure d'un polyester dérivé d'un diol aliphatique ou cycloaliphatique ou de leurs mélanges et d'au moins un acide dicarboxylique aromatique étant exclue.

2. Composition suivant la revendication 1, dans laquelle le phénol dihydroxylique répond à la formule:

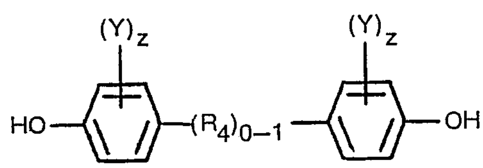

dans laquelle Y est choisi entre des groupes alkyle ayant 1 à 4 atomes de carbone, le chlore ou le brome, chaque z a indépendamment une valeur de 0 à 4 inclus, et $R_4$ est un radical d'hydrocarbure aliphatique saturé ou insaturé divalent choisi entre des radicaux alkylène et alkylidène ayant 1 à 3 atomes de carbone, et des radicaux cycloalkylène ou cycloalkylidène ayant jusqu'à et y compris 9 atomes de carbone.

3. Composition suivant la revendication 2, dans laquelle chaque z est égal à 0 et $R_4$ est un radical alkylidène de 3 atomes de carbone.

4. Composition suivant la revendication 1, dans laquelle l'acide dicarboxylique aromatique est un mélange d'acides isophtalique et téréphtalique.

5. Composition suivant la revendication 1, dans laquelle le poly(éther d'aryle) comprend des motifs récurrents de formule:

—O—E—O—E'

dans laquelle E est le résidu d'un phénol dihydroxylique et E' est le résidu d'un composé benzénique ayant un groupe inerte attirant des électrons.

6. Composition suivant la revendication 5, dans laquelle le poly(éther d'aryle) a des motifs récurrents de formule:

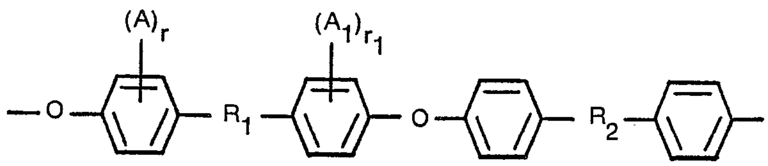

où A et $A_1$ peuvent être des groupes substituants inertes identiques ou différents et sont choisis entre des groupes alkyle ayant 1 ou 4 atomes de carbone, le fluor, le chlore, le brome, l'iode ou des radicaux alkoxy ayant 1 à 4 atomes de carbone, $R_1$ représente une liaison entre des atomes aromatiques de carbone ou un radical de jonction divalent, $R_2$ est un groupe sulfone, carbonyle ou sulfoxyde, r et $r_1$ sont des nombres entiers ayant une valeur de 0 à 4 inclus.

7. Composition suivant la revendication 6, dans laquelle r et $r_1$ sont égaux à 0, $R_2$ est un groupe $SO_2$ et $R_1$ répond à la formule suivante: